# EUROPÄISCHE PATENTSCHRIFT

(11) **EP 2 901 756 B1**
(45) Veröffentlichungstag und Bekanntmachung des Hinweises auf die Patenterteilung: **27.04.2016**
(21) Anmeldenummer: 13747353.4
(22) Anmeldetag: 02.08.2013
(51) Int. Cl.: H04W 28/26, H04W 4/02, H04W 4/04, H04W 24/10, H04L 29/08, G01C 21/32

(54) **VERFAHREN UND SYSTEM ZUM ERMITTELN EINER MOBILFUNKNETZQUALITÄT UND LADEN VON MOBILFUNKDATEN**
METHOD AND SYSTEM FOR DETERMINING A MOBILE COMMUNICATIONS NETWORK QUALITY AND DOWNLOADING MOBILE COMMUNICATIONS DATA
PROCÉDÉ ET SYSTÈME PERMETTANT DE DÉTERMINER LA QUALITÉ D'UN RÉSEAU DE RADIOTÉLÉPHONIE MOBILE ET DE CHARGER DES DONNÉES DE RADIOTÉLÉPHONIE MOBILE

(30) Priorität: 28.09.2012 DE 102012019185
(43) Veröffentlichungstag der Anmeldung: 05.08.2015
(73) Patentinhaber: Audi AG, 85045 Ingolstadt (DE)
(72) Erfinder: OLDEWURTEL, Frank, 85049 Ingolstadt (DE)
(74) Vertreter: Brandt, Kai
(86) Internationale Anmeldenummer: PCT/EP2013/002316
(87) Internationale Veröffentlichungsnummer: WO 2014/048518

(56) Entgegenhaltungen:
- WO-A1-01/19108
- DE-A1- 10 064 955
- DE-A1-102010 028 859
- US-B1- 6 466 797

## Beschreibung

Die Erfindung betrifft ein Verfahren zum Ermitteln einer Mobilfunknetzqualität und Laden von Mobilfunkdaten der im Oberbegriff des Patentanspruchs 1 angegebenen Art. Des Weiteren betrifft die Erfindung ein System zum Ermitteln einer Mobilfunknetzqualität und Laden von Mobilfunkdaten der im Oberbegriff des Patentanspruchs 12 angegebenen Art.

Ein solches Verfahren ist aus der DE 10 2010 028 859 A1 bekannt. Zum Ermitteln einer Mobilfunknetzqualität werden mittels in Kraftwagen vorgesehenen Erfassungseinheiten fortlaufend Daten erfasst, welche die Mobilfunknetzqualität an einem gegenwärtigen Ort der jeweiligen Kraftwagen quantifizieren. Anschließend werden die jeweiligen Daten an eine Datenbank übertragen, in welcher die Daten abgespeichert werden. Vor dem Laden entsprechender Mobilfunkdaten wird eine Route von zumindest einem der Kraftwagen ermittelt und anschließend wird ein die Mobilfunknetzqualität entlang der ermittelten Route quantifizierender Datensatz von der Datenbank mittels einer Kommunikationseinheit des Kraftwagens abgefragt. Schließlich werden Mobilfunkdaten in einen Datenspeicher des Kraftwagens mittels der Kommunikationseinheit unter Berücksichtigung des Datensatzes geladen. Ferner zeigt die DE 10 2010 028 859 A1 ein entsprechendes System zum Durchführen der erläuterten Verfahrensschritte.

Die DE 10 2010 002 740 A1 zeigt ein Fahrzeugkommunikationssystem mit einer fahrzeugseitigen Datenschnittstelle und einem mobilen, von einem Fahrzeug unabhängigen Endgerät mit einem Datenspeicher in einer Datenschnittstelle, die zur Kommunikation mit der fahrzeugseitigen Datenschnittstelle ausgebildet ist. Des Weiteren umfasst das Fahrzeugkommunikationssystem eine Entscheidungseinheit, welche dazu ausgebildet ist, Daten, die fahrzeugseitig verfügbar sind, zu klassifizieren, entweder als Daten mit geringer Latenzzeit oder Daten mit hoher Latenzzeit. Das Fahrzeugkommunikationssystem ist ferner dazu ausgebildet, Daten, die fahrzeugseitig verfügbar sind und eine geringe Latenzzeit aufweisen, über eine Mobilfunkschnittstelle an eine Zentralrechnervorrichtung zu senden und Daten, die fahrzeugseitig verfügbar sind und eine hohe Latenzzeit aufweisen, von der fahrzeugseitigen Datenschnittstelle an die Datenschnittstelle des mobilen Endgeräts zu übertragen und in den Datenspeicher zwischenzuspeichern.

Die DE 10 20120 028 996 A1 zeigt ein Verfahren, bei welchem Daten von einem fahrzeugexternen Netzwerk an eine Steuereinheit eines Kraftwagens und umgekehrt übertragen werden. Dabei ist es möglich, dass bestimmte Daten zunächst zwischengespeichert werden bis eine hinreichend gute Kommunikationsverbindung zu dem Netzwerk gegeben ist.

Des Weiteren zeigen die DE 10 2010 029 931 A1 und die DE 10 2008 050 406 A1 jeweils ein Verfahren, bei welchem Daten zwischen einem Server und einem Kraftwagen übertragen werden.

Es ist die Aufgabe der vorliegenden Erfindung, ein Verfahren sowie ein System der eingangs genannten Art bereitzustellen, mittels welchen auf verbesserte Art und Weise die Ermittlung einer Mobilfunknetzqualität und das Laden von Mobilfunkdaten erfolgen kann.

Diese Aufgabe wird durch ein Verfahren mit den Merkmalen des Patentanspruchs 1 und durch ein System mit den Merkmalen des Patentanspruchs 13 gelöst. Vorteilhafte Ausgestaltungen mit zweckmäßigen und nicht-trivialen Weiterbildungen der Erfindung sind in den abhängigen Ansprüchen angegeben.

Ein erfindungsgemäßes Verfahren zum Ermitteln einer Mobilfunknetzqualität und Laden von Mobilfunkdaten umfasst die folgenden Schritte:
- Fortlaufendes Erfassen von Daten, welche die Mobilfunknetzqualität an einem gegenwärtigen Ort eines jeweiligen Kraftwagens quantifizieren mittels in den Kraftwagen vorgesehenen Erfassungseinheiten;
- Übertragen der Daten an eine Datenbank, in welcher die Daten abgespeichert werden;
- Ermitteln einer Route von zumindest einem der Kraftwagen;
- Abfragen eines die Mobilfunknetzqualität entlang der Route quantifizierenden Datensatzes von der Datenbank mittels einer Kommunikationseinheit des Kraftwagens;
- Laden von Mobilfunkdaten in einen Datenspeicher des Kraftwagens mittels der Kommunikationseinheit unter Berücksichtigung des Datensatzes;
wobei sich das erfindungsgemäße Verfahren dadurch auszeichnet, dass
- mittels einer Datenverarbeitungseinrichtung ein die Mobilfunknetzqualität quantifizierender Gesamtdatensatz in vorgegebenen Intervallen unter Berücksichtigung der an die Datenbank übertragenen Daten ermittelt und in dieser gespeichert wird;
- der die Mobilfunknetzqualität entlang der Route quantifizierende Datensatz aus dem fortlaufend aktualisierten Gesamtdatensatz gewonnen wird.

In Form des Gesamtdatensatzes wird also über eine große und gegebenenfalls auch wachsende Anzahl an Kraftfahrzeugen entlang jeweiliger Fahrtrouten der Kraftwagen eine globale Wissensbasis geschaffen, welche die Mobilfunknetzqualität entlang der jeweils mittels der Kraftwagen zurückgelegten Routen quantifiziert. Der Umfang, die Qualität sowie die Zuverlässigkeit dieser Wissensbasis wird durch das fortlaufende Hinzufügen von Informationen aus den jeweiligen Kraftwagen stetig verbessert und aktualisiert. Dieses a priori Wissen über jeweilige Mobilfunknetzqualitäten für bestimmte Orte bzw. entlang gewisser Routen wird daraufhin für eine Prädiktion jeweiliger Kanalqualitäten an voraussichtlichen Fahrzeugpositionen entlang jeweils geplanter Fahrtrouten genutzt. Im Gegensatz zum in der DE 10 2010 028 859 A1 gezeigten Verfahren wird ein die Mobilfunknetzqualität charakterisierender Gesamtdatensatz also fortlaufend unter Berücksichtigung andauernd hinzugefügter Daten aktualisiert. Sich mit der Zeit ändernde Randbedingungen, welche die Mobilfunknetzqualität in den Gebieten beeinflussen, in welchen die jeweiligen Kraftwagen diese ermitteln, werden somit immer wieder aktualisiert, sodass eine besonders genaue Datengrundlage zur Vorhersage der Mobilfunknetzqualität bereitgestellt wird.

In Kenntnis der jeweiligen Mobilfunknetzqualität entlang der jeweiligen Routen der verschiedenen Kraftwagen können entsprechende Vorlademechanismen zum Laden von Mobilfunkdaten für unterschiedlichste Applikationen des Kraftwagens angewendet werden. Diese erlauben ein gezieltes Vorladen von Daten, beispielsweise in Form von Medieninhalten, die in Zukunft voraussichtlich von einem Nutzer abgefragt werden. Prinzipiell kann es sich bei den Daten um jegliche Arten von Daten handeln, beispielsweise um Textdaten, Bilddaten, Musikdaten, Filmdaten usw. Durch Anwendung dieser Vorlademechanismen werden beispielsweise Medieninhalte von Onlinefunktionen lokal in den jeweiligen Kraftwagen verfügbar gemacht, so dass diese unabhängig von der Mobilfunkverbindung jederzeit und fehlerfrei konsumiert werden können. Je nach Typ der Onlinefunktion und erwarteter Kanalqualität variiert die zu verfolgende Vorladestrategie, z.B. hinsichtlich der Anzahl vorzuladender Medieninhalte und der Reihenfolge auf Basis von Prioritäten.

Eine Entscheidungslogik selektiert letztlich aus einem Set von entwickelten Vorlademechanismen die geeignete Strategie bezüglich der gerade prädizierten Fahrzeugsituation bzw. Mobilfunknetzqualität. Damit wird im Fall einer in beispielsweise kurzfristig eintretenden Verschlechterung der Mobilfunkverbindung durch das Vorladen von Medieninhalten zu Zeiten noch guter Mobilfunkverbindung die Verfügbarkeit und die Dienstgüte von Onlinefunktionen wesentlich gesteigert. Aufgrund des lokalen Vorhaltens von Medieninhalten aus Onlinequellen können häufige Fehlerfälle vermieden werden, indem vor Eintritt von Fehlerfällen bereits auf die erzeugte lokale Quelle zurückgegriffen wird.

In vorteilhafter Ausgestaltung der Erfindung ist es vorgesehen, dass basierend auf dem Gesamtdatensatz in vorgegebenen Intervallen eine mit der Datenbank verknüpfte digitale Karte erstellt wird, mittels welcher die Mobilfunknetzqualität abgebildet wird. Mit anderen Worten wird eine Art Navigationskarte in einem Backend hinterlegt, welche mit den aufbereiteten Daten aus der kontinuierlich gewonnen Wissensbasis angereichert und verknüpft wird. Somit wird über diese zusätzliche Karteninformation eine Art globale Qualitätskarte für die Mobilfunknetzqualifät bereitgestellt, mittels welcher ein gezieltes Vorladen von Mobilfunkdaten zusätzlich unterstützt wird.

In weiterer vorteilhafter Ausgestaltung der Erfindung ist es vorgesehen, dass unter Berücksichtigung des Datensatzes für unterschiedliche Applikationen des Kraftwagens jeweilige Reihenfolgen festgelegt werden, gemäß welchen die jeweiligen den Applikationen zugeordneten Mobilfunkdaten in den Datenspeicher geladen werden. Beispielsweise kann für unterschiedliche Applikationen des Kraftwagens eine jeweilige Priorität vorgegeben sein oder durch einen Nutzer vorgegeben werden, wobei die Daten für die hoch priorisierten Applikationen zuerst in den Datenspeicher geladen werden, um zumindest deren Funktionsfähigkeit entlang der Route sicherzustellen.

Eine weitere vorteilhafte Ausführungsform der Erfindung sieht vor, dass unter Berücksichtigung des Datensatzes für die unterschiedlichen Applikationen jeweilige Zeitpunkte festgelegt werden, ab welchen die jeweiligen den Applikationen zugeordneten Mobilfunkdaten in den Datenspeicher geladen werden. Dadurch kann u.a. applikationsspezifisch sichergestellt werden, dass jeweilige Mobilfunkdaten unter Berücksichtigung der vorhergesagten Mobilfunknetzqualität entlang der Route so rechtzeitig bereitgestellt bzw. lokal in den Datenspeicher geladen werden, so dass die jeweiligen Applikationen unterbrechungs- bzw. störungsfrei ausgeführt werden können.

In weiterer vorteilhafter Ausgestaltung der Erfindung ist es vorgesehen, dass unter Berücksichtigung des Datensatzes für die unterschiedlichen Applikationen jeweilige Datenraten vorgegeben werden, gemäß welchen die jeweiligen den Applikationen zugeordneten Mobilfunkdaten in den Datenspeicher geladen werden. Zum einen wird dabei die örtliche bzw. entlang der Route jeweils insgesamt verfügbare Datenrate berücksichtigt und zum anderen wird in Abhängigkeit von den jeweiligen Applikationen die insgesamt zur Verfügung stehende Datenrate auf die jeweiligen Applikationen derart aufgeteilt, dass diese möglichst störungsfrei betrieben werden können.

Gemäß einer weiteren vorteilhaften Ausführungsform der Erfindung ist es vorgesehen, dass anhand von in der Kommunikationseinheit abgespeicherten Favoriten und/oder Wiedergabelisten die zu ladenden Mobilfunkdaten ermittelt werden. Beispielsweise kann anhand von hinterlegten Nutzerprofilen bekannt sein, welche Webseiten aufgerufen, welche Online Radio Streams empfangen oder weitere ähnliche Onlinedienste normalerweise verwendet werden, so dass entsprechend zu ladende Mobilfunkdaten für unterschiedlichste Applikationen des Kraftwagens im Vorfeld möglichst genau vorhergesagt und in Abhängigkeit der vorhergesagten Mobilfunknetzqualität entlang der Route rechtzeitig in den Datenspeicher geladen werden können.

In weiterer vorteilhafter Ausgestaltung der Erfindung ist es vorgesehen, dass als Daten, welche die Mobilfunknetzqualität an dem gegenwärtigen Ort des jeweiligen Kraftwagens charakterisieren, Messwerte bezüglich einer Empfangssignalstärke, einer Signalverzögerungszeit, einer Netzauslastung, einer Datenübertragungsrate und/oder eines Mobilfunknetztyps ermittelt werden. Dadurch kann die Mobilfunknetzqualität an den gegenwärtigen Orten der jeweiligen Kraftwagen besonders akkurat ermittelt werden.

Eine weitere vorteilhafte Ausführungsform der Erfindung sieht vor, dass die Mobilfunknetzqualität für verschiedene Tageszeiten, Wochentage, Jahreszeiten und/oder Ereignisse ermittelt und in dem Gesamtdatensatz hinterlegt wird. Entsprechende üblicherweise auftretende Schwankungen der Mobilfunknetzqualität zu unterschiedlichen Tages-, Wochen-, Jahreszeitenund/oder Ereignissen werden somit berücksichtigt, so dass der die Mobilfunknetzqualität charakterisierende Gesamtdatensatz besonders akkurat ist. Beispielsweise können uhrzeitabhängig unterschiedlich viele Kraftwagen eine bestimmte Route befahren und ein entsprechend hohes Mobilfunkdatenaufkommen verursachen. Infolgedessen schwankt auch die je Kraftwagen nutzbare Datenrate, da üblicherweise die bereitgestellte Datenrate je Funkzelle einen im Wesentlichen konstanten Wert aufweist. Insofern können zeitabhängig unterschiedliche, jeweils angepasste Vorlademechanismen ausgewählt bzw. genutzt werden.

Eine weitere vorteilhafte Ausführungsform der Erfindung sieht vor, dass mittels einer Anzeigeeinrichtung des Kraftwagens ein Kartenausschnitt angezeigt wird, in welchem die auf dem Datensatz basierende Mobilfunknetzqualität entlang der Route dargestellt wird. Dadurch wird Insassen des Kraftwagens auf besonders einfache Weise die vorhergesagte Mobilfunknetzqualität entlang der gewählten Route bzw. entlang der vorhergesagten Route dargestellt, so dass die Nutzer frühzeitig darüber Kenntnis erlangen, ob entsprechend gewünschte Applikationen des Kraftwagens überhaupt entlang der Route durchführbar sind. Ferner können die Nutzer in Kenntnis der Mobilfunknetzqualität entlang der Route entsprechende Vorlademechanismen gegebenenfalls für jeweilige Applikationen selber derart einstellen, dass deren Funktionsfähigkeit entlang der Route sichergestellt werden kann.

Bei einer weiteren vorteilhaften Ausführungsform der Erfindung ist es vorgesehen, dass jeweilige gegenwärtige Ortskoordinaten der Kraftwagen erfasst und gemeinsam mit den erfassten Daten zu jeweiligen Datentupeln gebündelt und an die Datenbank übermittelt werden. Des Weiteren ist es gemäß einer vorteilhaften Ausführungsform der Erfindung vorgesehen, dass jeweilige gegenwärtige Tageszeiten und/oder Datumsangaben erfasst und gemeinsam mit den erfassten Daten zu jeweiligen Datentupeln gebündelten an die Datenbank übermittelt werden. Dadurch kann die Mobilfunknetzqualität noch genauer ermittelt werden, indem dieser jeweilige Orte und/oder Tageszeiten sowie verschiedene Datumsangaben zugeordnet werden kann. Vorzugsweise werden die Datentupel unmittelbar nach ihrer Bündelung an die Datenbank übermittelt oder zunächst zu einem mehrere Datentupel umfassenden Datentupelsatz zusammengefasst und erst danach an die Datenbank übermittelt. Dabei kann beispielsweise berücksichtigt werden, wie gut eine augenblickliche Mobilfunknetzqualität ist, so dass basierend darauf entschieden werden kann, ob die Datentupel unmittelbar oder erst zeitverzögert und gebündelt übermittelt werden sollen. Ein wesentlicher Grund für diese Datenaggregation ist, dass es oftmals effizienter ist, weniger große Datenpakete als vielmehr kleine Datenpakete zu versenden. Effizienter ist hier im Sinne von Energieverbrauch und Datendurchsatz bgzl. einer Verbindung oder einem Verbindungskanal zu verstehen.

Ein erfindungsgemäßes System zum Ermitteln einer Mobilfunknetzqualität und Laden von Mobilfunkdaten umfasst:
- eine Mehrzahl von Kraftwagen mit jeweiligen Erfassungseinheiten, welche dazu ausgelegt sind, fortlaufend Daten zu erfassen, welche die Mobilfunknetzqualität an einem gegenwärtigen Ort der jeweiligen Kraftwagen quantifizieren, und diese an eine Datenbank des Systems übertragen, welche dazu ausgelegt ist, die Daten zu speichern;
- jeweilige Routenermittlungseinheiten der Kraftwagen, welche dazu ausgelegt sind, eine Route der jeweiligen Kraftwagen zu ermitteln;
- jeweilige Kommunikationseinheiten der Kraftwagen, welche dazu ausgelegt sind, jeweilige die Mobilfunknetzqualität entlang der jeweiligen Routen quantifizierende Datensätze von der Datenbank abzufragen und Mobilfunkdaten in einen jeweiligen Datenspeicher der Kraftwagen unter Berücksichtigung der jeweiligen Datensätze zu laden;
wobei sich das erfindungsgemäße System dadurch auszeichnet, dass
- das System eine Datenverarbeitungseinrichtung umfasst, welche dazu ausgelegt ist, einen die Mobilfunknetzqualität quantifizierenden Gesamtdatensatz in vorgegebenen Intervallen unter Berücksichtigung der an die Datenbank übertragenen Daten zu ermitteln und in dieser zu speichern;
- der abgefragte Datensatz zumindest ein Teil des fortlaufend aktualisierten Gesamtdatensatzes ist.

Vorteilhafte Ausführungen des erfindungsgemäßen Verfahrens sind als vorteilhafte Ausführungen des Systems anzusehen, wobei hier insbesondere das System Mittel umfasst, mit dem die Verfahrensschritte durchführbar sind.

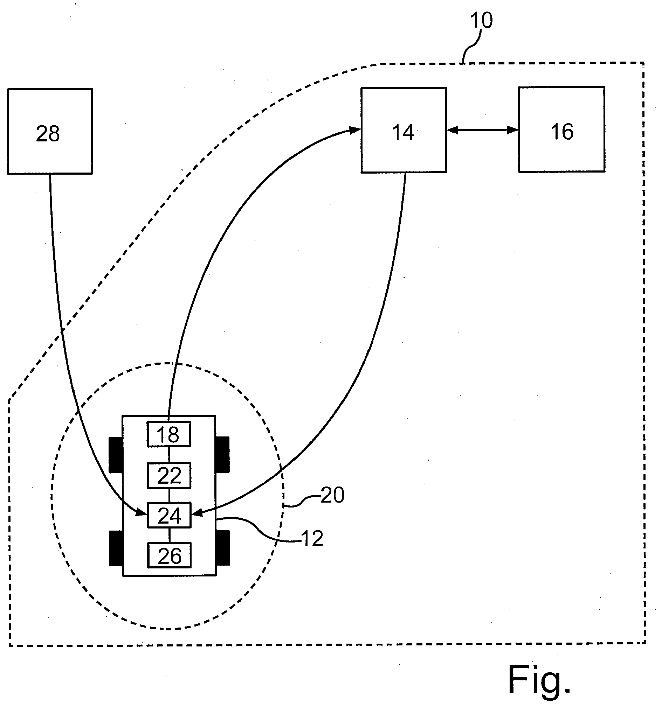

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Fig. alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Ausführungsbeispiele der Erfindung werden nachfolgend anhand der einzigen Fig. näher erläutert. Diese zeigt eine schematische Darstellung eines Systems zum Ermitteln einer Mobilfunknetzqualität und Laden von Mobilfunkdaten.

Ein System 10 zum Ermitteln einer Mobilfunknetzqualität und Laden von Mobilfunkdaten umfasst eine Mehrzahl von Kraftwagen 12, wobei vorliegend zur vereinfachten Darstellung lediglich ein Kraftwagen 12 gezeigt ist, eine Datenbank 14 sowie eine Datenverarbeitungseinrichtung 16. Die Kraftwagen 12 umfassen jeweilige Erfassungseinrichtungen 18, welche dazu ausgelegt sind, fortlaufend Daten zu erfassen, welche die Mobilfunknetzqualität an einem gegenwärtigen Ort 20 der jeweiligen Kraftwagen 12 quantifizieren. Ferner sind die Erfassungseinrichtungen 18 dazu ausgelegt, die erfassten Daten an die Datenbank 14 des Systems 10 zu übertragen, welche ihrerseits dazu ausgelegt ist, die Daten zu speichern.

Bei den Erfassungseinrichtungen 18 kann es sich über bereits üblicherweise in Kraftwagen 12 verbaute Fahrzeugsensorik handeln, welche Messwerte in Form von Rohdaten und weitere Informationen bezüglich einer Kanalqualität bzw. Empfangssignalstärke sowie eines Mobilfunknetzes bzw. des Mobilfunknetztyps periodisch sammeln und lokal vorverarbeiten können. Darüber hinaus können als Daten, welche die Mobilfunknetzqualität an dem gegenwärtigen Ort 20 des jeweiligen Kraftwagens 12 charakterisieren, Messwerte bezüglich einer Signalverzögerungszeit, einer Netzauslastung und/oder einer Datenübertragungsrate ermittelt und an die Datenbank 14 übertragen werden.

Die Kraftwagen 12 umfassen des Weiteren jeweilige Routenermittlungseinheiten 22, welche dazu ausgelegt sind, eine Route der jeweiligen Kraftwagen 12 zu ermitteln. Bei der Routenermittlungseinheit 22 kann es sich beispielsweise um eine Navigationseinrichtung des Kraftwagens 12 handeln, mittels welcher eine Route zu einem vorgegebenen Ziel ermittelt werden kann. Des Weiteren kann die Routenermittlungseinheit 22 auch dazu ausgelegt sein, anhand von unterschiedlichsten Erfahrungs- bzw. Messwerten eine wahrscheinliche Route, welche mit dem Kraftwagen 12 zurückgelegt werden wird, vorherzusagen.

Die Kraftwagen 12 umfassen des Weiteren jeweilige Kommunikationseinheiten 24, welche dazu ausgelegt sind, jeweilige die Mobilfunknetzqualität entlang der jeweiligen Routen quantifizierende Datensätze von der Datenbank 14 abzufragen und Mobilfunkdaten in einen jeweiligen Datenspeicher 26 unter Berücksichtigung der jeweiligen Datensätze zu laden. Die Kraftwagen 12 können auch mehrere weitere, hier nicht dargestellt Datenspeicher aufweisen, in welche applikationsspezifisch jeweilige Daten über das Mobilfunknetz geladen werden können.

Bei der Kommunikationseinheit 24 kann es sich beispielsweise um ein Infotainmentsystem des Kraftwagens 12 handeln, welches dazu ausgelegt ist, Mobilfunkdaten zu senden und zu empfangen. Bei dem Datenspeicher 26 kann es sich beispielsweise um eine Speichereinheit des Infotainmentsystems handeln, beispielsweise in Form einer Festplatte, einer Speicherkarte oder dergleichen, auf welcher Daten bzw. Informationen zwischengespeichert und entsprechenden Applikationen des Kraftwagens bzw. des Infotainmentsystems bereitgestellt werden können.

Die Datenverarbeitungseinrichtung 16 ist zudem dazu ausgelegt, einen die Mobilfunknetzqualität quantifizierenden Gesamtdatensatz in vorgegebenen Intervallen unter Berücksichtigung der an die Datenbank übertragenen Daten zu ermitteln und in dieser zu speichern. Bei dem jeweils abgefragten Datensatz handelt es sich zumindest um einen Teil des fortlaufend aktualisierten Gesamtdatensatzes.

Nachfolgend wird ein Verfahren zum Ermitteln einer Mobilfunknetzqualität und zum Laden von Mobilfunkdaten in die jeweiligen Datenspeicher 26 der Kraftwagen 12 erläutert. Eine Vielzahl von Kraftwagen 12, welche dem System 10 zugeordnet sind, erfassen fortlaufend Daten, welche die Mobilfunknetzqualität an einem gegenwärtigen Ort 20 eines der jeweiligen Kraftwagen 12 quantifizieren mittels der in den Kraftwagen 12 vorgesehenen Erfassungseinheiten 18. Dabei werden jeweilige gegenwärtige Ortskoordinaten der Kraftwagen 12 erfasst und gemeinsam mit den erfassten Daten zu jeweiligen Datentupeln gebündelt. Des Weiteren werden auch jeweilige gegenwärtige Tageszeiten und/oder Datumsangaben erfasst und gemeinsam mit den erfassten Daten zu jeweiligen Datentupeln gebündelt. Die so erfassten Daten bzw. Datentupel werden entweder unmittelbar nach ihrer Bündelung von den jeweiligen Erfassungseinrichtungen 18 an die Datenbank 14 übermittelt oder zunächst zu einem mehrere Datentupel umfassenden Datentupelsatz zusammengefasst und erst danach in vorgegebenen Zeitabständen an die Datenbank 14 übermittelt.

Bei sämtlichen zu dem System 10 zugehörigen Kraftwagen 12 kann vor dem Losfahren oder während der Fahrt der jeweiligen Kraftwagen 12 eine Route mittels den Routenermittlungseinheiten 22 ermittelt bzw. vorhergesagt werden. Anschließend wird mittels der jeweiligen Kommunikationseinheiten 24 ein die Mobilfunknetzqualität entlang der Route quantifizierender Datensatz von der Datenbank 14 abgefragt.

Mittels der Datenverarbeitungseinrichtung 16 wird fortlaufend ein die Mobilfunknetzqualität quantifizierender Gesamtdatensatz in vorgegebenen Intervallen unter Berücksichtigung der an die Datenbank übertragenen Daten ermittelt und in der Datenbank 14 gespeichert. Die Mobilfunknetzqualität kann dabei für verschiedene Tageszeiten, Wochentage, Jahreszeiten und/oder Ereignisse ermittelt und in dem Gesamtdatensatz hinterlegt werden. Somit enthält der die Mobilfunknetzqualität entlang der jeweiligen Routen quantifizierende Datensatz aus dem fortlaufend aktualisierten Gesamtdatensatz auch Informationen darüber, wie die Mobilfunknetzqualität voraussichtlich in Abhängigkeit von der Uhrzeit, dem Wochentag und/oder eines bestimmten Datums, wie beispielsweise einem Ferienbeginn, einem Feiertag oder dergleichen, schwanken könnte.

Basierend auf dem fortlaufend aktualisierten Gesamtdatensatz wird in vorgegebenen Intervallen eine mit der Datenbank 14 verknüpfte digitale Karte erstellt, mittels welcher die Mobilfunknetzqualität abgebildet wird.

Sobald die jeweiligen Datensätze zur Charakterisierung der Mobilfunknetzqualität entlang jeweiliger Routen der Kraftwagen 12 abgefragt worden sind, werden entsprechende Mobilfunkdaten zum Betreiben jeweiliger Applikationen des Kraftwagens 12 in die jeweiligen Datenspeicher 26 unter Berücksichtigung dieser Datensätze geladen.

Dabei werden für unterschiedliche Applikationen des Kraftwagens jeweilige Reihenfolgen festgelegt, gemäß welchen die jeweiligen den Applikationen zugeordneten Mobilfunkdaten in den Datenspeicher 26 geladen werden. Darüber hinaus werden unter Berücksichtigung des Datensatzes für die unterschiedlichen Applikationen auch jeweilige Zeitpunkte festgelegt, ab welchen die jeweiligen den Applikationen zugeordneten Mobilfunkdaten in den Datenspeicher geladen werden. Darüber hinaus werden unter Berücksichtigung des Datensatzes für die unterschiedlichen Applikationen auch jeweilige Datenraten vorgegeben, gemäß welchen die jeweiligen den Applikationen zugeordneten Mobilfunkdaten in den Datenspeicher 26 geladen werden.

Beispielhaft ist eine Datenquelle 28 dargestellt, aus welcher mittels der Kommunikationseinheit 24 in Form von Mobilfunkdaten entsprechende Daten bzw. Datenpakete zum Betreiben jeweiliger Applikationen des Kraftwagens 12 in den Datenspeicher 26 geladen werden. Bei der Datenquelle kann es sich beispielsweise um einen an das Internet angebundenen Server handeln, auf welchem Musikdaten, Videodaten, Nachrichten in Text- und oder Bildform oder dergleichen bereitgestellt werden. Es werden also gezielt gewisse Medieninhalte bzw. Daten in die Datenspeicher 26 vorgeladen, welche in Zukunft voraussichtlich von einem Nutzer abgefragt werden. Relevante Inhalte können z.B. über angelegte Favoriten oder Wiedergabelisten des Nutzers in der betreffenden Onlinefunktion identifiziert werden.

Durch die Anwendung der Vorlademechanismen werden Medieninhalte von Onlinefunktionen lokal in dem Kraftwagen 12 verfügbar gemacht, so dass diese unabhängig von der Mobilfunkverbindung jederzeit und fehlerfrei konsumiert werden können. Der Datenspeicher 26 fungiert somit als eine lokale Datenquelle innerhalb der Kraftwagen 12. Je nach Typ der Onlinefunktion und erwarteter Kanalqualität variiert diese für verschiedene Vorladestrategien, z.B. hinsichtlich der Anzahl vorzuladender Medieninhalte und der Reihenfolge auf Basis von Prioritäten.

Eine Entscheidungslogik selektiert letztlich aus einem Set von unterschiedlichen Vorlademechanismen die geeignete Strategie bezüglich der gerade prädizierten Fahrzeugsituation bzw. vorhergesagten Route in Abhängigkeit von der aktuell gegebenen Mobilfunknetzqualität. Darüber hinaus ist es möglich, dass mittels einer hier nicht gezeigten Anzeigeeinrichtung der Kraftwagen 12 ein jeweiliger Kartenausschnitt angezeigt wird, in welchem die auf dem Datensatz basierende Mobilfunknetzqualität entlang der Route dargestellt wird. Somit sind Fahrzeuginsassen jederzeit darüber informiert, wie gut eine jeweilige Mobilfunknetzqualität entlang der vorhergesagten bzw. der gewählten Route ist, so dass die Nutzer gegebenenfalls auch selber entsprechende Vorlademechanismen vorgeben können, um Mobilfunkdaten in Form von Medieninhalten derart für unterschiedliche Applikationen zu priorisieren, dass deren Funktionsfähigkeit entlang der Route sichergestellt wird.

Insgesamt wird mit dem System 10 bzw. durch das erläuterte Verfahren die Verfügbarkeit und die Dienstgüte von Onlinefunktionen wesentlich gesteigert, speziell im Fall einer kurzfristig eintretenden Verschlechterung einer Mobilfunkverbindung bzw. Mobilfunknetzqualität durch ein entsprechendes Vorladen von Medieninhalten zu Zeiten noch guter Mobilfunkverbindung. Aufgrund des lokalen Vorhaltens von Medieninhalten aus Onlinequellen können häufige Fehlerfälle vermieden werden, indem vor Eintritt von Fehlerfällen bereits auf die erzeugte lokale Quelle in Form des Datenspeichers 26 zurückgegriffen wird.

Das erläuterte Verfahren ist zudem sehr robust, da es z.B. Pufferfehler aufgrund schlechter oder schwankender Kanalqualitäten und Verbindungsabrisse aufgrund von Funklöchern handhabbar macht. Durch das lokale Vorhalten von Medieninhalten aus Onlinequellen sind die Auswirkungen dieser häufigen Fehlerfälle für entsprechende Nutzer nicht mehr wahrnehmbar. Grund hierfür ist, dass bevor eine schlechte Mobilfunkverbindung eintritt, auf die korrespondierend lokale Quelle in Form des Datenspeichers 26 zurückgegriffen werden kann.

## Patentansprüche

1. Verfahren zum Ermitteln einer Mobilfunknetzqualität und Laden von Mobilfunkdaten, mit den Schritten:
- fortlaufendes Erfassen von Daten, welche die Mobilfunknetzqualität an einem gegenwärtigen Ort (20) eines jeweiligen Kraftwagens (12) entlang jeweiliger Fahrtrouten der Kraftwagen (12) quantifizieren mittels in den Kraftwagen (12) vorgesehenen Erfassungseinheiten (18);
- Übertragen der Daten an eine Datenbank (14), in welcher die Daten abgespeichert werden;
- Ermitteln einer Route von zumindest einem der Kraftwagen (12);
- Abfragen eines die Mobilfunknetzqualität entlang der Route quantifizierenden Datensatzes von der Datenbank (14) mittels einer Kommunikationseinheit (24) des Kraftwagens (12);
- Laden von Mobilfunkdaten zum Betreiben jeweiliger Applikationen des Kraftwagens (12) in einen Datenspeicher (26) des Kraftwagens (12) mittels der Kommunikationseinheit (24) unter Berücksichtigung des Datensatzes;
**dadurch gekennzeichnet, dass**
- mittels einer Datenverarbeitungseinrichtung (16) ein die Mobilfunknetzqualität quantifizierender Gesamtdatensatz in vorgegebenen Intervallen unter Berücksichtigung der an die Datenbank (14) übertragenen Daten ermittelt und in dieser gespeichert wird, wobei der Gesamtdatensatz die Mobilfunknetzqualität entlang der jeweils mittels der Kraftwagen (12) zurückgelegten Routen quantifiziert;
- der die Mobilfunknetzqualität entlang der Route quantifizierende Datensatz aus dem fortlaufend aktualisierten Gesamtdatensatz gewonnen wird;
- unter Berücksichtigung des Datensatzes für die unterschiedlichen Applikationen jeweilige Datenraten vorgegeben werden, gemäß welchen die jeweiligen den Applikationen zugeordneten Mobilfunkdaten in den Datenspeicher (26) geladen werden.

2. Verfahren nach Anspruch 1,
**dadurch gekennzeichnet, dass**
basierend auf dem Gesamtdatensatz in vorgegebenen Intervallen eine mit der Datenbank (14) verknüpfte digitale Karte erstellt wird, mittels welcher die Mobilfunknetzqualität abgebildet wird.

3. Verfahren nach Anspruch 1 oder 2,
**dadurch gekennzeichnet, dass**
unter Berücksichtigung des Datensatzes für unterschiedliche Applikationen des Kraftwagens (12) jeweilige Reihenfolgen festgelegt werden, gemäß welchen die jeweiligen den Applikationen zugeordneten Mobilfunkdaten in den Datenspeicher (26) geladen werden.

4. Verfahren nach einem der vorhergehenden Ansprüche,
**dadurch gekennzeichnet, dass**
unter Berücksichtigung des Datensatzes für die unterschiedlichen Applikationen jeweilige Zeitpunkte festgelegt werden, ab welchen die jeweiligen den Applikationen zugeordneten Mobilfunkdaten in den Datenspeicher (26) geladen werden.

5. Verfahren nach einem der vorhergehenden Ansprüche,
**dadurch gekennzeichnet, dass**
anhand von in der Kommunikationseinheit abgespeicherten Favoriten und/oder Wiedergabelisten die zu ladenden Mobilfunkdaten ermittelt werden.

6. Verfahren nach einem der vorhergehenden Ansprüche,
**dadurch gekennzeichnet, dass**
als Daten, welche die Mobilfunknetzqualität an dem gegenwärtigen Ort des jeweiligen Kraftwagens charakterisieren, Messwerte bezüglich einer Empfangssignalstärke, einer Signalverzögerungszeit, einer Netzauslastung, einer Datenübertragungsrate und/oder eines Mobilfunknetztyps ermittelt werden.

7. Verfahren nach einem der vorhergehenden Ansprüche,
**dadurch gekennzeichnet, dass**
die Mobilfunknetzqualität für verschiedene Tageszeiten, Wochentage, Jahreszeiten und/oder Ereignisse ermittelt und in dem Gesamtdatensatz hinterlegt wird.

8. Verfahren nach einem der vorhergehenden Ansprüche,
**dadurch gekennzeichnet, dass**
mittels einer Anzeigeeinrichtung des Kraftwagens (12) ein Kartenausschnitt angezeigt wird, in welchem die auf dem Datensatz basierende Mobilfunknetzqualität entlang der Route dargestellt wird.

9. Verfahren nach einem der vorhergehenden Ansprüche,
**dadurch gekennzeichnet, dass**
jeweilige gegenwärtige Ortskoordinaten der Kraftwagen (12) erfasst und gemeinsam mit den erfassten Daten zu jeweiligen Datentupeln gebündelt und an die Datenbank (14) übermittelt werden.

10. Verfahren nach einem der vorhergehenden Ansprüche,
**dadurch gekennzeichnet, dass**
jeweilige gegenwärtige Tageszeiten und/oder Datumsangaben erfasst und gemeinsam mit den erfassten Daten zu jeweiligen Datentupeln gebündelt und an die Datenbank (14) übermittelt werden.

11. Verfahren nach Anspruch 9 oder 10,
**dadurch gekennzeichnet, dass**
die Datentupel unmittelbar nach ihrer Bündelung an die Datenbank (14) übermittelt oder zunächst zu einem mehrere Datentupel umfassenden Datentupelsatz zusammengefasst und erst danach an die Datenbank (14) übermittelt werden.

12. System (10) zum Ermitteln einer Mobilfunknetzqualität und Laden von Mobilfunkdaten, mit:
- einer Mehrzahl von Kraftwagen (12) mit jeweiligen Erfassungseinheiten (18), welche dazu ausgelegt sind, fortlaufend Daten entlang jeweiliger Fahrtrouten der Kraftwagen (12) zu erfassen, welche die Mobilfunknetzqualität an einem gegenwärtigen Ort (20) der jeweiligen Kraftwagen (12) quantifizieren, und diese an eine Datenbank (14) des Systems (10) zu übertragen, welche dazu ausgelegt ist, die Daten zu speichern;
- jeweiligen Routenermittlungseinheiten (22) der Kraftwagen (12), welche dazu ausgelegt sind, eine Route der jeweiligen Kraftwagen (12) zu ermitteln;
- jeweiligen Kommunikationseinheiten (24) der Kraftwagen (12), welche dazu ausgelegt sind, jeweilige die Mobilfunknetzqualität entlang der jeweiligen Routen quantifizierende Datensätze von der Datenbank (14) abzufragen und Mobilfunkdaten zum Betreiben jeweiliger Applikationen der Kraftwagen (12) in einen jeweiligen Datenspeicher (26) der Kraftwagen (12) unter Berücksichtigung der jeweiligen Datensätze zu laden;
**dadurch gekennzeichnet, dass**
- das System (10) eine Datenverarbeitungseinrichtung (16) umfasst, welche dazu ausgelegt ist, ein die Mobilfunknetzqualität quantifizierenden Gesamtdatensatz in vorgegebenen Intervallen unter Berücksichtigung der an die Datenbank (14) übertragenen Daten zu ermitteln und in dieser zu speichern, wobei der Gesamtdatensatz die Mobilfunknetzqualität entlang der jeweils mittels der Kraftwagen (12) zurückgelegten Routen quantifiziert;
- der abgefragte Datensatz zumindest ein Teil des fortlaufend aktualisierten Gesamtdatensatzes ist;
- die Kommunikationseinheiten (24) dazu ausgelegt sind, unter Berücksichtigung der jeweiligen Datensätze für die unterschiedlichen Applikationen jeweilige Datenraten vorzugehen, gemäß welchen die jeweiligen den Applikationen zugeordneten Mobilfunkdaten in die jeweiligen Datenspeicher (26) geladen werden.

## Claims

1. Method for determining a mobile communications network quality and downloading mobile communications data, comprising the steps
- continually acquiring data which quantify the mobile communications network quality at a present location (20) of a respective motor vehicle (12) along a respective travel route of motor vehicles (12) by means of acquisition units (18) provided in motor vehicles (12),
- transmitting the data to a database (14) in which the data are stored;
- determining a route of at least one of the motor vehicles (12);
- querying a data record from the database (14) quantifying the mobile communications network quality along the route by means of a communications unit (24) of the motor vehicle (12);
- loading mobile communications data for operating respective applications of the motor vehicle (12) into a data memory (26) of the motor vehicle (12) by means of the communication unit (24) taking into consideration the data record;
**characterized in that**
- by means of a data processing device (16) a main data record quantifying the mobile communications network quality at predefined intervals is determined taking into consideration the data transmitted to the database (14) and is saved in the latter, wherein the main data record quantifies the mobile communications network quality along the respective routes covered by the motor vehicles (12);
- the data record quantifying the mobile communications network quality along the route is obtained from the continuously updated main data record;
- by taking into consideration the data record for the different applications respective data rates are defined according to which the respective mobile communications data assigned to the applications are loaded into the data memory (26).

2. Method according to claim 1, **characterized in that** based on the main data record a digital map linked to the database (14) is generated at specified intervals, by means of which the mobile communications network quality is shown.

3. Method according to either claim 1 or 2, **characterized in that** taking into consideration the data record for different applications of the motor vehicle (12) respective sequences are determined according to which the respective mobile communications data allocated to the applications are loaded into the data memory (26).

4. Method according to any one of the preceding claims, **characterized in that** taking into consideration the data record for the different applications respective time points are determined from which the respective mobile communications data assigned to the applications are loaded into the data memory (26).

5. Method according to any one of the preceding claims, **characterized in that** the mobile communications data to be loaded is determined by means of favourites saved in the communication unit and/or playlists.

6. Method according to any one of the preceding claims, **characterized in that** as data which characterize the mobile communications network quality at the present location of the respite motor vehicle measurement valves are determined relating to reception signal strength, signal delay, network utilization, data transmission rate and type of mobile communications network.

7. Method according to any one of the preceding claims, **characterized in that** the mobile communications network quality is determined for different times of day, different days of the week, different seasons and/or events and saved in the main data record.

8. Method according to any one of the preceding claims, **characterized in that** a display device of the motor vehicle (12) displays a map section showing the mobile communications network quality along the route based on the data record.

9. Method according to any one of the preceding claims, **characterized in that** present respective position coordinates of the motor vehicles (12) are determined and bundled together with the determined data into respective data tuples and transmitted to the database (14).

10. Method according to any one of the preceding claims, **characterized in that** present respective times of day and/or data details are determined and bundled together with the detected data into respective data tuples and transmitted to the database (14).

11. Method according to either claim 9 or claim 10, **characterized in that** the data tuples are transmitted directly after bundling to the database (14) or firstly combined into a data tuple set comprising a plurality of data tuples and only then transmitted to the database (14).

12. System (10) for determining a mobile communications network quality and loading mobile communications data, comprising:
- a plurality of motor vehicles (12) comprising respective acquisition units (18) which are designed to continually acquire data along respective travel routes of the motor vehicles (12), which quantify the mobile communications network quality at a present location (20) of the respective motor vehicles (12) and transmit this to a database (14) of the system (10), which is designed to save the data;
- respective route determining units (22) of the motor vehicles (12) which are designed to determine a route of the respective motor vehicles (12);
- respective communication units (24) of the motor vehicles (12) which are designed to query the respective data records of the database (14) quantifying the mobile communications network quality along the respective routes and to load mobile communications data for operating respective applications of the motor vehicles (12) into a respective data memory (26) of the motor vehicles (12) taking into account the respective data records; **characterized in that**
- the system (10) comprises a data processing device (16) which is designed to determine a main data record quantifying the mobile communications network quality at predefined intervals taking into account the data transmitted to the database (14) and save it in the latter, wherein the main data record quantifies the mobile communications network quality along the respective routes covered by the motor vehicles (12);
- the queried data record is at least a portion of the continually updated main data record;
- the communications units (24) are designed taking into consideration the respective data records for the different application respective to give respective data rates, according to which the respective mobile communications data assigned to the applications are loaded into the respective data memory (26).

## Revendications

1. Procédé de détermination de la qualité d'un réseau de téléphonie mobile et de chargement de données de téléphonie mobile, comprenant les étapes consistant à :
- saisir en continu des données qui quantifient la qualité d'un réseau de téléphonie mobile dans un emplacement actuel (20) d'un véhicule automobile respectif (12) le long de routes de parcours respectives des véhicules automobiles (12) au moyen d'unités de saisie (18) prévues dans les véhicules automobiles (12) ;
- transférer les données à une banque de données (14) dans laquelle les données sont mémorisées ;
- déterminer une route d'au moins l'un des véhicules automobiles (12) ;
- interroger un jeu de données de la banque de données (14) quantifiant la qualité du réseau de téléphonie mobile le long de la route au moyen d'une unité de communication (24) du véhicule automobile (12) ;
- charger des données de téléphonie mobile pour activer des applications respectives du véhicule automobile (12) dans une mémoire de données (26) du véhicule automobile (12) au moyen de l'unité de communication (24) en tenant compte du jeu de données ;
**caractérisé en ce que**,
- au moyen d'un dispositif de traitement de données (16), un jeu de données total quantifiant la qualité du réseau de téléphonie mobile est déterminé à intervalles prédéfinis en tenant compte des données transférées à la banque de données (14) et mémorisé dans celle-ci, dans lequel le jeu de données total quantifie la qualité du réseau de téléphonie mobile le long des routes parcourues respectivement au moyen des véhicules automobiles (12) ;
- le jeu de données quantifiant la qualité du réseau de téléphonie mobile le long de la route est tiré du jeu de données total actualisé en continu ;
- en tenant compte du jeu de données, on prédéfinit pour les différentes applications des débits de données respectifs selon lesquels les données de téléphonie mobile respectives affectées aux applications sont chargées dans la mémoire de données (26).

2. Procédé selon la revendication 1,
**caractérisé en ce que**,
sur la base du jeu de données total, on établit à intervalles définis une carte numérique liée à la banque de données (14), au moyen de laquelle la qualité du réseau de téléphonie mobile est illustrée.

3. Procédé selon la revendication 1 ou la revendication 2,
caractérisé ce que,
en tenant compte du jeu de données, on fixe pour différentes applications du véhicule automobile (12) des séquences respectives selon lesquelles les données de téléphonie mobile respectives affectées aux applications sont chargées dans la mémoire de données (26).

4. Procédé selon l'une quelconque des revendications précédentes,
caractérisé en cé que,
en tenant compte du jeu de données, on fixe pour les différentes applications des moments respectifs à partir desquels les données de téléphonie mobile respectives affectées aux applications sont chargées dans la mémoire de données (26).

5. Procédé selon l'une quelconque des revendications précédentes,
**caractérisé en ce que**,
sur la base des favoris et/ou des listes de lecture mémorisés dans l'unité de communication, on détermine les données de téléphonie mobile à charger.

6. Procédé selon l'une quelconque des revendications précédentes,
**caractérisé en ce que** :
l'on détermine comme données qui caractérisent la qualité du réseau de téléphonie mobile à l'emplacement actuel du véhicule automobile respectif des valeurs de mesure concernant l'intensité d'un signal de réception, le temps de retard d'un signal, l'utilisation du réseau, le débit de transfert de données et/ou le type de réseau de téléphonie mobile.

7. Procédé selon l'une quelconque des revendications précédentes,
**caractérisé en ce que** :
la qualité du réseau de téléphonie mobile est déterminée pour les tranches horaires, jours de la semaine, saisons et/ou événements divers et est mémorisée dans le jeu de données total.

8. Procédé selon l'une quelconque des revendications précédentes,
**caractérisé en ce que**,
au moyen d'un dispositif d'affichage du véhicule automobile (12), on affiche une section de carte dans laquelle la qualité du réseau de téléphonie mobile se basant sur le jeu de données est représentée le long de la route.

9. Procédé selon l'une quelconque des revendications précédentes,
**caractérisé en ce que** :
des coordonnées d'emplacements actuelles respectives des véhicules automobiles (12) sont mémorisées et sont regroupées conjointement avec les données saisies en tuples de données respectifs et transmis à la banque de données (14).

10. Procédé selon l'une quelconque des revendications précédentes,
**caractérisé en ce que** :
des tranches horaires et/ou des indications de dates actuelles respectives sont saisies et regroupées conjointement avec les données saisies en tuples de données respectifs et transmis à la banque de données (14).

11. Procédé selon la revendication 9 ou la revendication 10,
**caractérisé en ce que** :
les tuples de données sont directement transmis à la banque de données (14) après leur regroupement ou sont d'abord regroupées en jeu de tuples de données comprenant plusieurs tuples de données et sont transmis seulement ensuite à la banque de données (14).

12. Système (10)'de détermination de la qualité d'un réseau de téléphonie mobile et de chargement de données de téléphonie mobile, comprenant :
- une pluralité de véhicules automobiles (12) avec des unités de mémorisation respectifs (18), qui sont conçus pour mémoriser en continu des données le long de routes de parcours respectives des véhicules automobiles (12), lesquelles données quantifient la qualité du réseau de téléphonie mobile dans un emplacement actuel (20) des véhicules automobiles respectifs (12), et les transférer à une banque de données (14) du système (10) qui est conçu pour mémoriser les données ;
- des unités de détermination de routes respectives (22) des véhicules automobiles (12), qui sont conçues pour déterminer une route des véhicules automobiles respectifs (12) ;
- des unités de communication respectives (24) des véhicules automobiles (12), qui sont conçus pour interroger les jeux de données respectifs de la banque de données (14) quantifiant la qualité du réseau de téléphonie mobile le long des routes respectives et charger les données de téléphonie mobile pour activer des applications respectives des véhicules automobiles (12) dans une mémoire de données respective (26) des véhicules automobiles (12) en tenant compte des jeux de données respectifs ;
**caractérisé en ce que** :
- le système (10) comprend un dispositif de traitement de données (16) qui est conçu pour saisir un jeu de données total quantifiant la qualité du réseau de téléphonie mobile à intervalles 'prédéfinis en tenant compte des données transférées à la banque de données (14) et les mémoriser dans celle-ci, dans lequel le jeu de données total quantifie la qualité du réseau de téléphonie mobile le long des routes respectivement parcourues au moyen des véhicules automobiles (12) ;
- le jeu de données interrogé est au moins une partie du jeu de données total actualisé en continu ;
- les unités de communication (24) sont conçues pour prévoir en tenant compte des jeux de données respectifs pour les différentes applications des débits de données respectifs selon lesquels les données de téléphonie mobile respectives affectées aux applications sont chargées dans les mémoires de données respectives (26).
